# EUROPEAN PATENT SPECIFICATION

(11) **EP 2 756 450 B1**
(45) Date of publication and mention of the grant of the patent: **04.04.2018**
(21) Application number: 11757841.9
(22) Date of filing: 13.09.2011
(51) Int. Cl.: G06K 9/00, G06T 7/40, B60S 1/08

(54) **METHOD FOR DETECTION OF A RAIN DROP ON THE WINDSCREEN OF A VEHICLE AND DRIVER ASSISTANCE SYSTEM**
VERFAHREN ZUR ERKENNUNG VON REGENTROPFEN AUF DER WINDSCHUTZSCHEIBE EINES FAHRZEUGS UND FAHRERASSISTENZSYSTEM
PROCÉDÉ DE DÉTECTION D'UNE GOUTTE DE PLUIE SUR LE PARE-BRISE D'UN VÉHICULE ET SYSTÈME D'ASSISTANCE AU CONDUCTEUR

(43) Date of publication of application: 23.07.2014
(73) Proprietor: Valeo Schalter und Sensoren GmbH, 74321 Bietigheim-Bissingen (DE)
(72) Inventor: AHIAD, Samia, F-93250 Villemomble (FR); REBUT, Julien, 91330 Yerres (FR)
(86) International application number: PCT/EP2011/065843
(87) International publication number: WO 2013/037402

(56) References cited:
- EP-A2- 1 640 746
- WO-A1-2011/107118
- US-A1- 2004 200 948
- US-A1- 2007 115 357
- US-B2- 7 860 275
- AURELIEN CORD ET AL: "Towards rain detection through use of in-vehicle multipurpose cameras", INTELLIGENT VEHICLES SYMPOSIUM (IV), 2011 IEEE, IEEE, 5 June 2011 (2011-06-05), pages 833-838, XP031998994, DOI: 10.1109/IVS.2011.5940484 ISBN: 978-1-4577-0890-9
- MARTIN ROSER ET AL: "Video-based raindrop detection for improved image registration", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27 September 2009 (2009-09-27), pages 570-577, XP031664663, ISBN: 978-1-4244-4442-7
- JEE-HUN PARK ET AL: "Development of Vision based Control Smart Windwhield Wiper System for Intelligent Vehicle", SICE-ICCAS 2006 INTERNATIONAL JOINT CONFERENCE, IEEE, PISCATAWAY, NJ, USA, 1 October 2006 (2006-10-01), pages 4398-4403, XP031050048, ISBN: 978-89-950038-4-8
- "3 Correcting Imaging Defects, Other neighborhood noise-reduction methods" In: John C. Russ: "The IMAGE PROCESSING Handbook - Fourth Edition", 1 January 2002 (2002-01-01), CRC Press, XP002672334, ISBN: 084931142X pages 166-167, From "Another method that uses ranking (...)" until "with the mean or median of the outside region"; page 166 - page 167 figure 38

## Description

The invention relates to a method for detection of a rain drop on the windscreen of a vehicle and a driver assistance system developed for processing such a method.
It is known to detect rain drops on the windscreen of a vehicle, to determine whether specific functions, for instance turning on the headlights and/or the wiper blades are to be processed.
Such a detection is extremely complex and difficult, as different scenarios of a rain can occur on a windscreen depending on the situation. Therefore, with conventional methods the decision whether or not a rain drop is on the windscreen or not, is inaccurate.
US 2007/0115357 discloses a way to detect raindrops or other substances (dirt, condensation) on a windscreen of a vehicle using a camera. As a function of the type of substance different systems of the vehicle are activated, e.g. wipers in the case of raindrops but the defogger in case of condensation.
WO 2011/107118 discloses a way to reduce the time to detect raindrops by rejecting objects in an image taken by a camera which, although they potentially represent raindrops, fail to have certain characteristics which are typical for raindrops.
It is task of the present invention to create a method and a driver assistance system with which the detection of a raindrop on a windscreen can be processed more accurately.
This task is met by a method and a driver assistance system according to the independent claims.
With a method according to the invention, for detecting a rain drop on a windscreen of a vehicle, a camera which can be placed in/on a vehicle, captures an image of at least a part of the windscreen. It is intended that first image points in the image, which are brighter than a first luminance threshold value are extracted and that second image points, which are darker than the second luminance threshold value are extracted and the first and the second image points are fused to a fusion image, and the fusion image is taken into consideration for detection of rain drop. This is to be specially emphasized, as it is particularly difficult to exactly detect rain drops on daylight. A fusion image, which is specifically produced, makes it possible to have a much more precise basis for precisely identifying a raindrop.

Preferably, the first and the second image points are summed up to create a fusion image. This alternative can be done with minimal effort but still enhances the precision of the identification.

Preferably, the first and/or the second luminance threshold value can be adjusted in dependence of at least one ambient parameter and/or a vehicle parameter.

This can also be done dynamically, such that, depending on the ambient conditions, the luminance threshold values can be adjusted. The variability and resulting from that, the adaptability of the method to changing ambient conditions is therefore ensured.

Preferably, for ambient parameters the time of day and/or the weather situation and/or for vehicle parameters the speed and/or the inclination of the vehicle are taken into consideration.

Preferably in dependence of the ambient brightness of the vehicle at least one specific brightness dependent extraction of image points from the image is processed, and these extracted image points are taken into consideration for detecting a rain drop. With the method according to the invention it is therefore determined, how many different extraction methods for extracting image points from an image are processed, depending on the ambient brightness. Especially, it is also determined, depending on the ambient brightness of the vehicle, which extraction methods out of a number of extraction methods are chosen to extract image points. With such an criterion, which depends on the ambient brightness, the precision and accuracy of the detection of a rain drop can be enhanced. On the method according to the invention, it is therefore also provided that at least to different extraction methods are supplied, which are chosen for image extraction, based upon the parameters of the ambient brightness of the vehicle.

Preferably it is provided that on darkness with bright zones not illuminated by the vehicle only a first extraction is processed, on which first image points in the image, which are brighter than a first luminance threshold value are extracted. Very pinpointed and well-defined only one extraction method is chosen and processed on such specific ambient brightness scenarios, which is specified in a manner that brighter image points are extracted from the image.

Preferably it is provided, that on darkness without zones not illuminated by the vehicle in the vicinity of the vehicle, only a second extraction is processed on which second image points, which are darker than a second luminance threshold value are extracted. As on such ambient scenarios rain drops appear as darker points on the windscreen, the precision of such an identification of raindrops can be drastically enhanced by such a choice and processing of an image extraction process.

This can also be said for the above mentioned first method, on which it is dark with brighter zones not illuminated by the vehicle in the vicinity of the vehicle, as especially in such cases, when, for instance, it is night time and the vehicle moves along an illuminated road, these rain drops are seen as particularly bright spots.

Since, depending on the ambient brightness, different extraction scenarios are chosen and processed, it is possible to, apart from enhancing the accuracy of the rain drop detection, process the method very pinpointed and well-defined. And thus, it is possible to, by using the specification of different extraction methods, minimize the identification effort for image points on the one hand and based on that the identification of the rain drops on the other hand. Thanks to that, the calculation effort can be minimized drastically and processed a lot faster.

Preferably, two different extractions of image points are processed on daylight. Thus, also on a very specific ambient brightness, an individual scenario is given, and at least to identification processes are processed to enhance the precision of the identification.

It is preferred that in a pre-processing stage of the method a binary mask image which is used for region detection is computed. Therefore it is preferred that an adaptive threshold is used which is a simple but effective blob detector. The adaptive threshold performs local binarization by computing local mean and removing everything that is below this local mean. However, because the light condition affects the quality of this blob detector the function parameters of the adaptive threshold, which are blob size and constant to be removed, are assigned in a look-up table comparing the speed and the light conditions and the best parameters observed for blob detection as the preferred embodiment. Preferably, there are two adaptive thresholds, one that detects clearer regions and one that detects darker regions. Preferably, both images are fusioned into one single image with a simple summation of the pixels. Preferably, then it is proceeded to a morphological dilatation, a next erosion (morphological closure) so that the regions with darker or clearer regions are melted together.

Preferably, at least one characteristic, especially a form and/or a contour and/or an adjustment of the form and/or the orientation of the brightness gradient and/or a vector showing the angles of the local edges is determined from the fusion image. Characterization of such a fusion image is thus possible in a very precise manner and all other declarations regarding the detection of raindrops can be enhanced.

Therefore it is preferred that especially of the pre-processing, as mentioned above, a labilization step or labilization stage has to be done. In this labilization stage, the mask is to be used and each blob is assigned by an identification and by a structure. Preferably, simple connecting components are detected with respect to the image that contains pixel intensities between either 0 or 255. Especially every connected pixels of intensity 255 are mapped into regions. Then, statistical features of the blob can be computed. Preferably, the histogram of oriented gradients and the local binary pattern are computed. Especially the hog result is a vector, histogram of angles of local edges, which gives the general idea of the shape. The local binary pattern result is also a vector histogram, which gives an information on texture by local neighbourhood analysis.

Preferably a brightness spreading pattern of a fusion image is compared to a brightness spreading pattern of a rain drop and depending on that the fusion image is taken into consideration whether the fusion image shows a rain drop or not.

Preferably, the form of the fusion image is compared to the reference form and dependent on that the fusion image can be identified as a rain drop in the image.

In particular, the reference form is compared to the form of the extracted image point collection as part of the image and dependent on that the image point collection is identified as a raindrop. This is especially done with those scenarios, where, depending on the ambient brightness, only one extraction method is processed.

It is particularly advantageous that for identifying the first image points a White-Top-Hat-method is used and for identifying the second image points a Black-Top-Hat-method. These approaches make it possible to base information based on a defined reference form of a rain drop and the extraction of first and/or second image points, making it possible to rapidly and precisely identify rain drops in an image. Thanks to these approaches, it is possible exactly detect raindrops on the windscreen even with the very different rain patterns.

Preferably, a so called region approach is chosen for identifying a rain drop. This is characterised in that, the pixel or image points are grouped, if their characteristics are at least similar, whereas there are specific tolerances and thresholds defined for measuring the similarity. From these grouped pixels, homogeneous regions are created, on which the further rain drop detection is based in a very exact manner.

Preferably, neighbouring image points, especially, first and/or second image points are , depending on at least one characteristic of the image points, especially the brightness, compared with one another and depending on the comparison, homogeneous regions in the fusion image are identified. If such a homogeneous region is identified, the information which is basis for the further method are taken into consideration for identification of a rain drop. Especially, it is intended to examine neighbouring image points in the image for at least one image point characteristic, in order to identify an object corresponding to the reference form. Depending on the comparison a homogenous region is identified by use of the characteristics of the image points, and depending on the size of the homogenous region compared with the reference form a part of the image is identified as an object corresponding to the reference form.

In the following, examples of the invention are shown by use of schematic drawings. It is shown:
- Fig. 1: a general processing scenario for detecting a rain drop on a windscreen of a vehicle;
- Fig. 2: a diagram for further explanation of the method for identifying a rain drop;
- Fig. 3: a further diagram for explanation of the method for identifying a rain drop on the windscreen;
- Fig. 4: a sequence chart of the partial steps for identifying a rain drop;
- Fig. 5: a further sequence chart of partial steps for identifying a rain drop on a windscreen.

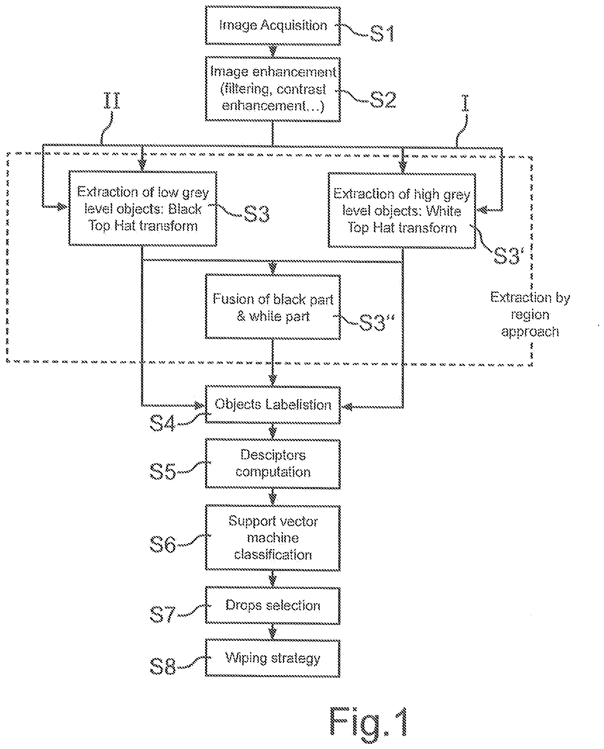

In Fig. 1, a general sequence chart is shown, in which approaches for identifying a rain drop on a window, especially a windscreen of a vehicle, are explained. On the information gained on the rain drop, it is then possible to base a driver assistance system, which then starts and process the corresponding functions in dependence of the information.

A main aspect of the detection method is based on the fact that there has to be done a region approach for detecting rain drops on the wind screen of a vehicle. Such a region approach is based on grouping pixels using the characteristics similarity until forming homogeneous regions. Therefore, a region approach is based on homogeneity and characteristic similarity of each pixel with its neighbours, and when no similarity is found the processed region stops and another region begins. Therefore further morphological operation can be used for regions extraction. Preferably, Top-Hat-Transforms are used. Two kinds of Top-Hat-Transforms are used where the one is the White-Top-Hat-Transform and the other is the Black-Top-Hat-Transform. The Top-Hat-method extracts from an image all objects that are smaller than a chosen structuring element. Further, the White-Top-Hat-Transfrom extract pixels which are brighter than their background, whereas the Black-Top-Hat-Transform extracts pixels which are darker than the background.

As it can be seen in Fig. 1 within a first step S1 an image acquisition is done. In a second step S2 an image enhancement is done. Therefore, for example a filtering and/or a contrast enhancement could be done.

Within further steps it has to be decided which of the different extraction methods which are provided have to be used to extract pixels respectively image points from the picture respectively image to be captured by the camera. For this, the brightness of the environment of the vehicle has to be detected. For this, one or more sensors of the car are used.

If the brightness of the environment of the car is very low and therefore there is a dark situation especially night in dark areas without any bright zones produced by light sources other than the vehicle itself a second extraction II is done. Therefore, there is an environment situation where no bright zones are given and there it is all dark. Only bright zones produced by light sources of the car itself, maybe by activated vehicle headlights.

With this second extraction method II an extraction of low grey level objects has to be done. Therefore the Black-Top-Hat-Transform is used. With this second image points respectively pixels are extracted which are darker than a second brightness threshold.

If this extraction step has to be done within step S3 in the next step S4, object labilization is done. This is done on the basis of the extracted image points in step S3.

After the object labilization, is done, the scriptors computation is done in step S5. In the next step S6 support vector machine classification is done. Further in a step S7 a drop selection has to be done and in a next step S8 a whipping strategy has to be done. Therefore, with this method a rain drop on the windshield could be detected in a very precise way especially in this specified environmental conditions at night.

If the environmental conditions are different and perhaps there is a night with illuminated areas, especially brighter zones produced by light sources other than the car itself, may be by a street lamp or things like that an extraction method I is done, which is different from the extraction method II. As it can be seen from Fig. 1 after step S2 in this situation the extraction method I, which is the first extraction method, has to be done. With this, an extraction of high grey level objects is done and therefore the White-Top-Hat-Transform is used. With the White-Top-Hat-Transform first image points of picture captured by the camera are extracted which are brighter than a first brightness threshold. This is done in step S3'. For further detection of a rain drop on the basis of these extracted image points an object labilization is done and it is demonstrated in Fig. 1 by step S4.

On the basis of this, the further steps S5 to S8 as already explained are done.

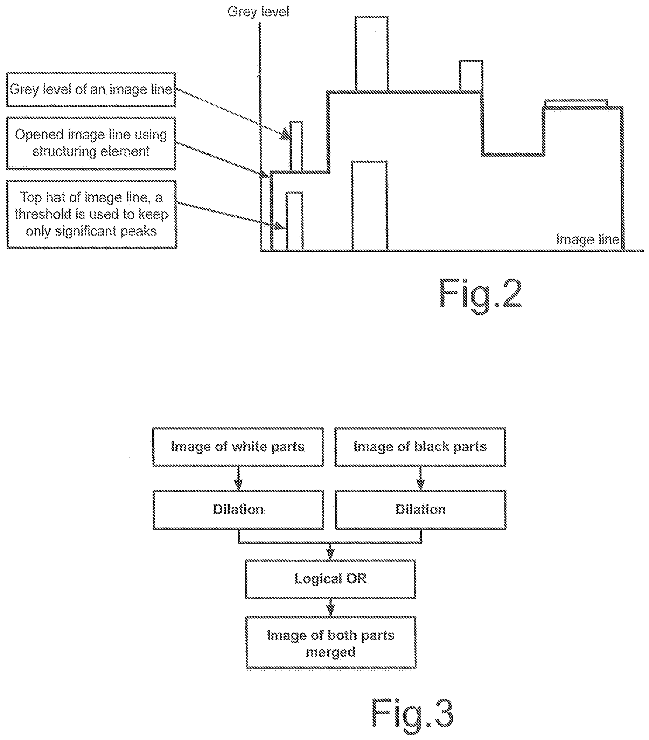

A preferred embodiment is given by the fact that with environmental conditions with the ambient light at least the extraction methods I and II have to be done and in a further step S3" these extracted first and second image points by White-Top-Hat-Transform and Black-Top-Hat-Transform are fused together. Therefore the image points have to be fused by a simple summation of the pixels preferably. As it can be seen in Fig. 2 which shows a diagram with the parameters image line and grey level in a two-dimensional case a reference shape of a rain drop is further defined and stored in control unit of the vehicle. It has to be said the driver assistance system of the vehicle has at least one storage unit, at least one control unit and maybe some other units to carry out the methods already explained and to be explained with figures 2 to 5.

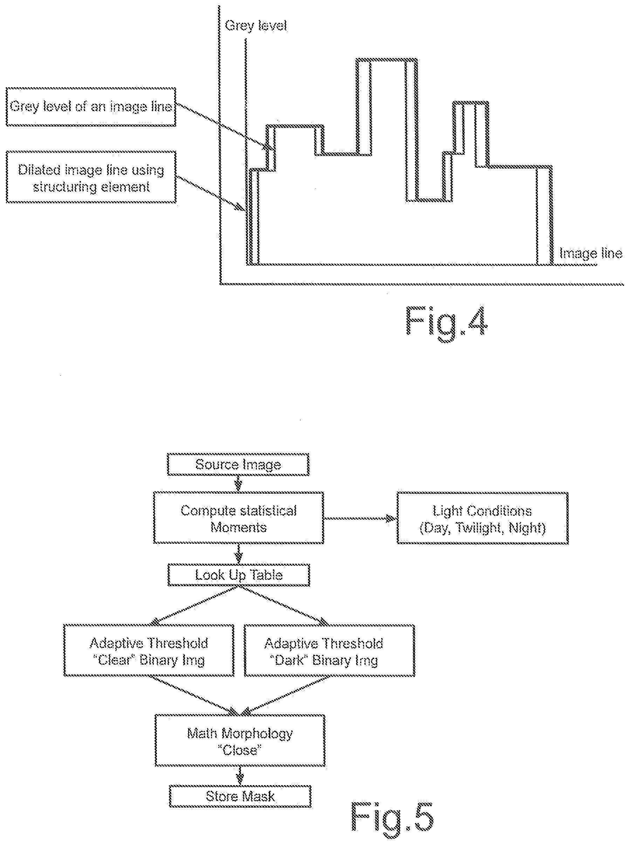

Clear and dark regions which are close together are often parts of the same object as it is the case for rain drops ("specular spot"). According to present invention, a fusion is performed of the image of clear regions and the image of dark regions in order to get the whole objects and not just parts of it (just the clear or the dark part). Such fusion is achieved by first performing a summation of the pixels at same position between the two images to obtain an image with all the regions, dark as well as clear ones. Nevertheless, the really close dark and clear regions are still not necessarily connected. Therefore, and to achieve to connect those regions into a single blob, some morphological "closure" (mathematical operation) can be performed. Therefor, a structuring element is used having a certain shape (possibly elliptic like 4 pixels width time 3 pixels height but could also be rectangle like 6 pixels long time 4 pixels large) with an anchor point (shape centre by default). The structuring element can be considered as a mask to be applied on each pixel when scanning image lines. A pixel wise classification is then performed by applying some morphological operation like some dilation and/or erosion operations. In case of dilation operation, the structuring element acts like a local maximum operator. As the structuring element is scanning over the image, dilation process computes the maximal pixel value overlapped by the structuring element and replaces the image pixel under the anchor point with that maximal value. Dilation process generates enlarged features in the image. An erosion operation corresponds to a similar operation while this time the structuring element acts like a local minimum operator i.e. replacing the image pixel under the anchor point with the minimum value overlapped by the structuring element. There exists a variety of morphological operations to be applied according to different parameters. Finally, an image of bigger regions being the result of the fusion of clear and dark regions is obtained (morphological closure, see Fig. 5). As a result darker and clearer regions are melted together. The generated binary mask is then stored (last step on Fig. 5). This processing step therefore leads to the detection of blobs or the extraction of objects from the image based on contrasts in the grey scale value of the pixels.

Further threshold on the resulting Top-Hat-Image is applied to eliminate noise. Especially the middle of range of resulting image dynamic is used as such a threshold.

Different morphological operation can be advantageously performed like an opening operation. Such operation consists of performing first an erosion operation on the source image then afterwards performing a dilation operation on the resulting image. It allows to eliminate bright peaks in an image while a bright peak corresponds to set of pixels having gray level upper than neighbours and size lower than structuring element. In Fig. 2 a grey level of an image line is shown as an embodiment. Further, opened image line using a structuring element is shown. Further, in Fig. 2 a Top-Hat of an image line is given and a threshold is used to keep only significant peaks. The Top-Hat transform corresponds to a subtraction of the opened image from the source image. This allows to recover peaks eliminated by opening operations.

As it is shown in Fig. 3 the fusion of the image points extracted in step S3 and S3' comprises a further step in dilation of this image of white parts and in dilation of this image of black parts. This dilation is preferably done to enlarge extracted component boundaries and therefore increase probability for each component to be closer to the complementary component. A dilation operation example is shown in Fig. 4, which shows a grey level of an image line and the resulting image line after performing the dilation morphological operation on it. As the structuring element is scanning over the image line, dilation process computes the maximal pixel value overlapped by the structuring element and replace in a resulting image the image pixel under the anchor point with that maximal value. Dilation process generates enlarged features in the image.

In Fig. 5 a flow diagram of special part steps of the method are shown. As it can be seen, this processing stage role is to compute a binary mask image which is used for region detection. An adaptive threshold is used which a simple and efficient blob detector. The adaptive threshold performs local binarization by computing local mean and removing everything that is below this local mean. Further, because the light condition affects the quality of this blob detector, the function parameters of the adaptive threshold (block size and constant to be removed) are assigned in a look-up table comparing the speed and the light conditions and the best parameters observed for blob detection. There are two adaptive thresholds, one that detects clearer regions and one that detects darker regions. As it is already explained, a fusion of both images into one single image with a simple summation of the pixels is done. Then, a morphological dilatation is proceeded and next erosion (morphological closure) so that regions with darker and clearer regions are melted together. In fact, different kind of morphological operation can be performed at that level depending on the situation.

## Claims

1. Method for identifying a raindrop on the windscreen of a vehicle, wherein
with a camera, an image of at least a part of the windscreen is captured and first image points in the image, which are brighter than a first luminance threshold value are extracted and second image points, which are darker than a second luminance threshold value are extracted and the first and second image points are fused into a fusion image, with the fusion image being taken into consideration for the detection of a rain drop and the first and/or the second luminance threshold value can be adjusted in dependence on at least one vehicle parameter **characterized in that**,
as vehicle parameter the inclination of the vehicle is taken into consideration.

2. Method according to claim 1,
**characterized in that**,
the first and the second image points are summed up for the production of a fusion image.

3. Method according to claim 1 or 2,
**characterized in that**,
the first and/or the second luminance threshold value can be adjusted in dependence on at least one ambient parameter of the vehicle and at least one vehicle parameter.

4. Method according to claim 3,
**characterized in that**,
as ambient parameter the time of the day and/or the weather situation are taken into consideration.

5. Method according to claim 3 or 4,
**characterized in that**,
as vehicle parameter, in addition to the inclination of the vehicle, the speed is taken into consideration.

6. Method according to one of the preceding claims,
**characterized in that**,
an identification number is assigned to a fusion image, with which its location can be identified in the image and/or it can be identified in relation to other fusion images.

7. Method according to one of the preceding claims,
**characterized in that**,
a characteristic of a fusion image, especially a form and/or an adjustment of the contour of the fusion image limit and/or an orientation of a brightness gradient and/or a vector, showing the angles of the local edges, is identified.

8. Method according to one of the preceding claims,
**characterized in that**,
for identifying the first image points a White-Top-Hat-method and for identifying the second image points a Black-Top-Hat-method is processed.

9. Method according to one of the preceding claims,
**characterized in that**,
a brightness distribution pattern of a fusion image is compared to a brightness distribution pattern of a rain drop and dependent on whether the fusion image shows a rain drop, the fusion image is taken into consideration.

10. Method according to one of the preceding claims,
**characterized in that**,
a reference form of a rain drop is defined as identification form, and in the image it is looked for a part of the image matching the reference form.

11. Method according to claim 7 and 11,
**characterized in that**,
the form of a fusion image is compared to the reference form and dependent on that the fused image is identified as a rain drop in the image.

12. Method according to claim 10 or 11,
**characterized in that**,
it is possible to adjust the reference form in dependence on at least one ambient parameter and/or vehicle parameter.

13. Method according to one of the preceding claims,
**characterized in that**,
neighbouring image points, especially first and/or second image points of the image, are compared, especially brightness, and dependent on that homogeneous regions, especially in the fusion image are identified and dependent on an identification of a homogeneous region, this information is taken into consideration for detecting a rain drop in the image.

14. Method according to one of the preceding claims,
**characterized in that**,
the extraction of first and/or second image points as basis for assessing the identification of rain drops is only processed on daylight.

15. Driver assistance system adapted to execute a method according to one of the preceding claims.

## Patentansprüche

1. Verfahren zur Identifizierung eines Regentropfens auf der Windschutzscheibe eines Fahrzeugs, wobei mit einer Kamera ein Bild wenigstens eines Teils der Windschutzscheibe aufgenommen wird, und erste Bildpunkte im Bild, die heller als ein erster Leuchtdichteschwellenwert sind, extrahiert werden, und zweite Bildpunkte, die dunkler als ein zweiter Leuchtdichteschwellenwert sind, extrahiert werden, und die ersten und zweiten Bildpunkte zu einem Fusionsbild vereinigt werden, wobei das Fusionsbild zur Erkennung eines Regentropfens berücksichtigt wird, und der erste und/oder der zweite Leuchtdichteschwellenwert in Abhängigkeit von mindestens einem Fahrzeugparameter angepasst werden können,
**dadurch gekennzeichnet, dass**
als Fahrzeugparameter die Neigung des Fahrzeugs berücksichtigt wird.

2. Verfahren nach Anspruch 1,
**dadurch gekennzeichnet, dass**
die ersten und die zweiten Bildpunkte zur Erzeugung eines Fusionsbildes summiert werden.

3. Verfahren nach Anspruch 1 oder 2,
**dadurch gekennzeichnet, dass**
der erste und/oder der zweite Leuchtdichteschwellenwert in Abhängigkeit von mindestens einem Umgebungsparameter des Fahrzeugs und mindestens einem Fahrzeugparameter abgepasst werden können.

4. Verfahren nach Anspruch 3,
**dadurch gekennzeichnet, dass**
als Umgebungsparameter die Tageszeit und/oder die Wetterlage berücksichtigt werden.

5. Verfahren nach Anspruch 3 oder 4,
**dadurch gekennzeichnet, dass**
als Fahrzeugparameter zusätzlich zur Neigung des Fahrzeugs die Geschwindigkeit berücksichtigt wird.

6. Verfahren nach einem der vorhergehenden Ansprüche,
**dadurch gekennzeichnet, dass**
eine Identifizierungsnummer zu einem Fusionsbild zugeordnet wird, mit der seine Position im Bild identifiziert werden kann, und/oder es in Bezug auf andere Fusionsbilder identifiziert werden kann.

7. Verfahren nach einem der vorhergehenden Ansprüche,
**dadurch gekennzeichnet, dass**
eine Charakteristik eines Fusionsbildes, insbesondere eine Form und/oder eine Anpassung der Kontur der Fusionsbildbegrenzung und/oder eine Orientierung eines Helligkeitsgradienten und/oder ein Vektor, identifiziert wird, welche die Winkel der lokalen Kanten darstellt.

8. Verfahren nach einem der vorhergehenden Ansprüche,
**dadurch gekennzeichnet, dass**
zum Identifizieren der ersten Bildpunkte ein White-Top-Hat-Verfahren und zum Identifizieren der zweiten Bildpunkte ein Black-Top-Hat-Verfahren verarbeitet wird.

9. Verfahren nach einem der vorhergehenden Ansprüche,
**dadurch gekennzeichnet, dass**
ein Helligkeitsverteilungsmuster eines Fusionsbildes mit einem Helligkeitsverteilungsmuster eines Regentropfens verglichen wird, und das Fusionsbild in Abhängigkeit davon, ob das Fusionsbild einen Regentropfen darstellt, berücksichtigt wird.

10. Verfahren nach einem der vorhergehenden Ansprüche,
**dadurch gekennzeichnet, dass**
eine Bezugsform eines Regentropfens als Identifizierungsform definiert wird, und im Bild nach einem Teil des Bildes gesucht wird, welcher der Bezugsform entspricht.

11. Verfahren nach Anspruch 7 und 11,
**dadurch gekennzeichnet, dass**
die Form eines Fusionsbildes mit der Bezugsform verglichen wird, und in Abhängigkeit davon das vereinigte Bild als ein Regentropfen im Bild identifiziert wird.

12. Verfahren nach Anspruch 10 oder 11,
**dadurch gekennzeichnet, dass**
es möglich ist, die Bezugsform in Abhängigkeit von mindestens einem Umgebungsparameter und/oder Fahrzeugparameter anzupassen.

13. Verfahren nach einem der vorhergehenden Ansprüche,
**dadurch gekennzeichnet, dass**
benachbarte Bildpunkte, insbesondere erste und/oder zweite Bildpunkte des Bildes, verglichen werden, insbesondere Helligkeit, und in Abhängigkeit davon homogene Regionen, insbesondere im Fusionsbild, identifiziert werden, und in Abhängigkeit von einer Identifizierung einer homogenen Region diese Information zum Erkennen eines Regentropfens im Bild berücksichtigt wird.

14. Verfahren nach einem der vorhergehenden Ansprüche,
**dadurch gekennzeichnet, dass**
die Extraktion erster und/oder zweiter Bildpunkte als Basis zum Beurteilen der Identifizierung von Regentropfen nur bei Tageslicht verarbeitet wird.

15. Fahrerassistenzsystem, das zum Ausführen des Verfahrens nach einem der vorhergehenden Ansprüche ausgelegt ist.

## Revendications

1. Procédé d'identification d'une goutte de pluie sur le pare-brise d'un véhicule, où, avec une caméra, une image d'au moins une partie du pare-brise est capturée et des premiers points d'image dans l'image, qui sont plus brillants qu'une première valeur seuil de luminance sont extraits, et des deuxièmes points d'image, qui sont plus foncés qu'une deuxième valeur seuil de luminance, sont extraits, et les premier et deuxième points d'image sont fusionnés en une image de fusion, l'image de fusion étant prise en considération pour la détection d'une goutte de pluie et les première et/ou seconde valeur seuil de luminance peuvent être ajustées en lien avec au moins un paramètre du véhicule,
**caractérisé en ce que**,
comme paramètre du véhicule, l'inclinaison du véhicule est prise en compte.

2. Procédé selon la revendication 1,
**caractérisé en ce que**
les premier et deuxième points d'image sont additionnés pour la production d'une image de fusion.

3. Procédé selon la revendication 1 ou la revendication 2,
**caractérisé en ce que**
les première et/ou deuxième valeurs seuil de luminance peuvent être ajustées en fonction d'au moins un paramètre ambiant du véhicule et d'au moins un paramètre du véhicule.

4. Procédé selon la revendication 3,
**caractérisé en ce que**,
comme paramètre ambiant, l'heure du jour et/ou les conditions météorologiques sont prises en compte.

5. Procédé selon la revendication 3 ou la revendication 4,
**caractérisé en ce que**,
comme paramètre du véhicule, en plus de l'inclinaison du véhicule, la vitesse est prise en compte.

6. Procédé selon l'une des revendications précédentes,
**caractérisé en ce que**
un numéro d'identification est attribué à une image de fusion, avec lequel son emplacement peut être identifié dans l'image et/ou il peut être identifié en lien avec d'autres images de fusion.

7. Procédé selon l'une des revendications précédentes,
**caractérisé en ce que**
une caractéristique d'une image de fusion, en particulier une forme et/ou un ajustement du contour de la limite de l'image de fusion et/ou une orientation d'un gradient de luminosité et/ou d'un vecteur, montrant les angles des bords locaux, est identifiée.

8. Procédé selon l'une des revendications précédentes,
**caractérisé en ce que**,
pour identifier les premiers points d'image, un procédé de type chapeau haut de forme blanc est exécuté, et pour identifier les deuxièmes points d'image, un procédé de type chapeau haut de forme noir est exécuté.

9. Procédé selon l'une des revendications précédentes,
**caractérisé en ce que**,
un motif de distribution de luminosité d'une image de fusion est comparé à un motif de distribution de luminosité d'une goutte de pluie et, en fonction du fait que l'image de fusion présente une goutte de pluie, ou non, l'image de fusion est prise en considération.

10. Procédé selon l'une des revendications précédentes,
**caractérisé en ce que**,
une forme de référence d'une goutte de pluie est définie comme forme d'identification et, dans l'image, il est recherché une partie de l'image correspondant à la forme de référence.

11. Procédé selon la revendication 7 et la revendication 11,
**caractérisé en ce que**,
la forme d'une image de fusion est comparée à la forme de référence et elle dépend du fait que l'image fusionnée soit identifiée comme une goutte de pluie dans l'image.

12. Procédé selon la revendication 10 ou la revendication 11,
**caractérisé en ce que**,
il est possible d'ajuster la forme de référence en fonction d'au moins un paramètre ambiant et/ou d'un paramètre du véhicule.

13. Procédé selon l'une des revendications précédentes,
**caractérisé en ce que**,
des points d'image voisins, en particulier des premier et/ou deuxièmes points d'image de l'image, sont comparés, en particulier leur luminosité et, en fonction de ceux-ci, des régions homogènes, en particulier dans l'image de fusion, sont identifiées et, en fonction d'une identification d'une région homogène, ces informations sont prises en compte pour détecter une goutte de pluie dans l'image.

14. Procédé selon l'une des revendications précédentes,
**caractérisé en ce que**,
l'extraction de premiers et/ou deuxièmes points d'image comme base pour évaluer l'identification de gouttes de pluie n'est effectuée qu'à la lumière du jour.

15. Système d'aide à la conduite adapté pour exécuter un procédé selon l'une des revendications précédentes.
